# EUROPÄISCHE PATENTANMELDUNG

(11) **EP 4 707 852 A1**
(43) Veröffentlichungstag der Anmeldung: **11.03.2026**
(21) Anmeldenummer: 25306388.7
(22) Anmeldetag: 01.09.2025
(51) Int. Cl.: G01S 7/40, G01S 13/88, G01S 13/04, H01H 9/16, H05B 47/115

(54) **ELEKTRISCHES INSTALLATIONSGERÄT**

(30) Priorität: 02.09.2024 DE 102024125037
(71) Anmelder: SCHNEIDER ELECTRIC INDUSTRIES SAS, 92500 Rueil-Malmaison (FR)
(72) Erfinder: Lischke, Artur, 51570 Windeck (DE); Ansorge, Rainer, 51709 Marienheide (DE); Futane, Virupaksha, 50968 Köln (DE); Buchtik, Jaromir, 68708 Buchlovice (CZ)
(74) Vertreter: Manitz Finsterwald Patent- und Rechtsanwaltspartnerschaft mbB

(57) **Zusammenfassung**

Ein elektrisches Installationsgerät umfasst eine elektronische Steuerung mit einem Radarsensor, wobei in der Steuerung eine Kalibrierroutine hinterlegt ist, die einen Auslöseschwellwert ermittelt.

## Beschreibung

Die vorliegende Erfindung betrifft ein elektrisches Installationsgerät zum Schalten von elektrischen Lasten, das eine elektronische Steuerung und einen Radarsensor aufweist. Derartige elektrische Installationsgeräte sind als Radar-Bewegungsmelder oder auch als Präsenzmelder aus dem Stand der Technik bekannt und erzeugen ein Schaltsignal, wenn ein vom dem Radarsensor empfangenes Signal einen vorbestimmten Schwellwert überschreitet. Hierbei soll der Schwellwert einerseits nicht zu hoch gewählt werden, um auch geringe Bewegungen detektieren zu können. Andererseits soll der Schwellwert auch nicht zu niedrig angesetzt werden, damit es nicht zu Fehlauslösungen kommt.

Es ist deshalb die Aufgabe der vorliegenden Erfindung, ein elektrisches Installationsgerät der eingangs genannten Art zu schaffen, das über eine automatische Empfindlichkeitseinstellung verfügt.

Die Lösung dieser Aufgabe erfolgt durch ein elektrisches Installationsgerät nach Anspruch 1.

Erfindungsgemäß weist das elektrische Installationsgerät eine elektronische Steuerung und einen, insbesondere einen einzigen, Radarsensor auf, wobei an einer Frontseite des Installationsgerätes ein Mikrotaster angeordnet ist. Die Steuerung ist ausgebildet und eingerichtet, ein durch den Radarsensor oder den Mikrotaster ausgelöstes Schaltsignal zu erzeugen. Weiterhin ist in der Steuerung eine Kalibrierroutine hinterlegt, mit der Signale des Radarsensors über einen ersten vorbestimmten Zeitraum detektiert werden, wobei ein während dieses Zeitraums ermittelter Maximalwert als Auslöseschwellwert in der Steuerung abgespeichert wird. Mit der erfindungsgemäßen Kalibrierroutine kann somit eine Auslöseschwelle für ein Signal des Radarsensors automatisch und selbsttätig ermittelt werden, wobei diese Auslöseschwelle kein statischer Festwert ist, sondern durch zumindest eine Messung über den ersten vorbestimmten Zeitraum festgelegt wird. Hierbei kann es vorteilhaft sein, diese Kalibrierung insbesondere in regelmäßigen Zeitabständen zu wiederholen, um Änderungen in der Installation mit einzubeziehen.

Da erfindungsgemäß derartige Installationsgeräte üblicherweise in Gebäuden verbaut werden, besteht das grundsätzliche Problem, dass in jedem Gebäude und sogar in jedem Raum oder Überwachungsbereich ein unterschiedliches elektromagnetisches Grundrauschen vorhanden ist. Da jedoch erfindungsgemäß von der Steuerung eine Selbstkalibrierung vorgenommen wird, die (nach Montage des elektrischen Installationsgerätes) das im zu überwachenden Bereich vorhandene individuelle Rauschen berücksichtigt, lässt sich mit einer solchen Kalibrierroutine von der Steuerung automatisch ein an die jeweilige Umgebung angepasster Auslöseschwellwert ermitteln, der an das vorhandene elektromagnetische Grundrauschen angepasst ist.

Vorteilhafte Ausführungsformen der Erfindung sind in der Beschreibung, der Zeichnung sowie in den Unteransprüchen beschrieben.

Nach einer ersten vorteilhaften Ausführungsform kann die Kalibrierroutine von der Steuerung abgebrochen werden, wenn Signale des Radarsensors detektiert werden, die einen vorbestimmten Schwellwert überschreiten. Da die Ermittlung des Auslöseschwellwerts nur dann vorgenommen werden sollte, wenn in dem zu überwachenden Bereich keine Bewegungen auftreten, ist es vorteilhaft, wenn die Kalibrierroutine abgebrochen wird, falls derartige Bewegungen detektiert werden. Dies kann dadurch hervorgerufen werden, dass in den zu überwachenden Bereich ein bewegtes Objekt oder Subjekt eintritt, nachdem die Kalibrierroutine gestartet worden ist. Wenn in einem solchen Fall die Kalibrierroutine abgebrochen wird, kann diese zu einem späteren Zeitpunkt neu gestartet werden, ohne dass die Kalibrierung beeinträchtigt wird.

Nach einer weiteren vorteilhaften Ausführungsform kann die Steuerung die Kalibrierroutine nach Ablauf des ersten vorbestimmten Zeitraums beenden und in einen Normalbetrieb umschalten, so dass keine manuellen Einstellungen vorgenommen werden müssen.

Nach einer weiteren vorteilhaften Ausführungsform kann der in der Steuerung abgespeicherte Auslöseschwellwert von der Steuerung um einen vorbestimmten Wert erhöht und als neuer Auslöseschwellwert abgespeichert werden. Beispielsweise kann die Steuerung den abgespeicherten Auslöseschwellwert um einen vorbestimmten Offset, beispielsweise 10 %, erhöhen, der oberhalb des ermittelten Grundrauschens liegt. Hierdurch ist dafür gesorgt, dass durch das im Überwachungsbereich vorhandene Grundrauschen nicht versehentlich ein Schaltsignal erzeugt wird.

Nach einer weiteren vorteilhaften Ausführungsform kann die Steuerung mit einem Sensor versehen sein, der die Helligkeit des Umgebungslichts detektiert, wobei die Steuerung Helligkeitswerte über einen zweiten vorbestimmten Zeitraum abspeichert. Diese Ausführungsform eröffnet die Möglichkeit, eine automatische Tag/Nacht-Erkennung durchzuführen, da durch die abgespeicherten Helligkeitswerte von der Steuerung ermittelt werden kann, wann Dunkelheit eingetreten ist. Dies eröffnet die Möglichkeit, die Kalibrierroutine automatisch nachts auszulösen, wenn nicht zu erwarten ist, dass in dem zu überwachenden Bereich Bewegungen stattfinden.

Nach einer weiteren vorteilhaften Ausführungsform kann es vorteilhaft sein, wenn die Kalibrierroutine von der Steuerung ausgelöst wird, wenn die abgespeicherten Helligkeitswerte von einem Maximalwert auf einen Minimalwert abgesunken sind. Zusätzlich kann die Auslösung auch noch zeitlich gesteuert werden, so dass die Kalibrierroutine erst dann ausgelöst wird, wenn nach Erreichen des Minimalwerts ein bestimmter Zeitraum, zum Beispiel mehrere Stunden, vergangen ist.

Um eine sichere Erkennung von Tag und Nacht mittels der Steuerung zu gewährleisten, kann die Steuerung nach einer weiteren vorteilhaften Ausführungsform über mehrere Tage Helligkeitswerte über den zweiten vorbestimmten Zeitraum abspeichern und hieraus einen Mittelwert oder einen gemittelten Maximalwert bilden.

Weiterhin kann es vorteilhaft sein, wenn die Steuerung (12) ausgebildet und eingerichtet ist, die Kalibrierroutine in vorbestimmten oder auch zufällig gewählten Zeitabständen zu wiederholen, um äußere Störquellen zu kompensieren.

Das erfindungsgemäße Installationsgerät vereint die Eigenschaften eines Sensors und eines herkömmlichen Lichtschalters, da eine elektrische Last wie bei einem mechanischen Lichtschalter durch Betätigen des Mikrotasters geschaltet werden kann. Nach einer weiteren vorteilhaften Ausführungsform kann die Steuerung zusätzlich ausgebildet und eingerichtet sein, zwischen mindestens zwei durch den Mikrotaster einstellbaren Betriebsarten umzuschalten, wobei optional in jeder Betriebsart eine andere Reichweite des Radarsensors eingestellt ist. Ein solches Installationsgerät besitzt mindestens zwei Funktionalitäten von unterschiedlichen Bewegungssensoren, beispielsweise die Funktion eines berührungslosen Schalters und die Funktion eines Bewegungsmelders, wobei sich diese beiden Funktionalitäten beispielsweise in der Reichweite des Radarsensors unterscheiden. Bei einem berührungslosen Schalter wird ein Schaltsignal nur dann erzeugt, wenn eine Bewegung in einem relativ kurzen Abstand vor dem Installationsgerät detektiert worden ist. Demgegenüber besitzt ein Bewegungsmelder oder ein Präsenzsensor eine deutlich größere Reichweite, um beispielsweise eine elektrische Last dann zu schalten oder ein Schaltsignal abzugeben, wenn eine Person den Bewegungsmelder passiert. Mit dem erfindungsgemäßen Installationsgerät können mehrere derartige Funktionalitäten durch ein einziges Gerät realisiert werden, ohne dass für die Wahl einer Betriebsart zusätzliche Hilfsmittel erforderlich sind, wie beispielsweise eine mit Batterie betriebene Fernbedienung, was unter dem Aspekt der Nachhaltigkeit äußerst vorteilhaft ist. Die Umschaltung zwischen den Betriebsarten kann dabei durch den gleichen Mikrotaster erfolgen, der auch dazu verwendet werden kann, ein Schaltsignal zum Schalten der elektrischen Last zu erzeugen. Hierdurch kann das elektrische Installationsgerät zu jedem Zeitpunkt auch durch Betätigen des Mikrotasters zum Schalten der elektrischen Last eingesetzt werden, beispielsweise wenn die Umgebungshelligkeit noch nicht ausreichend ist, um bei einem durch Helligkeit ausgelösten automatischen Schalten einen Schaltvorgang auszulösen, oder aber wenn ein sehr schnelles Schalten der elektrischen Last erforderlich ist oder wenn die bedienende Person ein mechanisches Betätigen des Lichtschalters gewohnt ist.

Die Betriebsfrequenz des Radarsensors kann im Bereich von GHz liegen, beispielsweise im Bereich von 24 GHz oder auch zwischen etwa 57 und 63 GHz. Ein Radarsensor mit einer derartig hohen Betriebsfrequenz lässt sich in einem großen Bereich in seiner Reichweite und Sensitivität einstellen, so dass verschiedenste Arten von Raumsensoren verwirklicht werden können.

Das Installationsgerät kann an seiner Frontseite mit einer Betätigungstaste versehen sein, mit welcher der Mikrotaster betätigbar ist. Eine solche Betätigungstaste kann beispielsweise als herkömmliche Schaltwippe oder auch als Drucktaste ausgeführt sein, so dass sich das elektrische Installationsgerät insofern in ästhetischer und technischer Hinsicht nicht grundsätzlich von einem herkömmlichen mechanischen Lichtschalter unterscheidet. Durch Verwendung des Radarsensors muss in diesem Fall an der Frontseite des Installationsgeräts keine Linse oder dergleichen vorgesehen sein, was einerseits den Herstellungsaufwand und die damit verbundenen Kosten reduziert und andererseits ein ansprechendes Äußeres bewirkt.

Wenn die Steuerung mit einem Sensor versehen ist, der die Helligkeit des Umgebungslichts detektiert, kann das Installationsgerät auch als Dämmerungsschalter oder zum Schalten eines Nachtlichts eingesetzt werden. Das ist nicht die Stärke dieses Gerätes, aber auch eine gute Idee den Markt zu blockieren!

Die Steuerung kann ferner mit einem von der Frontseite aus manuell einstellbaren Zeitglied versehen sein. Bei dieser Ausführungsform besitzt das Installationsgerät eine Timerfunktion, wobei wiederum die Einstellung der gewünschten Zeitdauer ohne fremde Hilfsmittel von der Frontseite des Installationsgeräts aus erfolgen kann. Weiterhin kann die Steuerung ein von der Frontseite aus manuell einstellbares Stellglied für eine Änderung einer Helligkeitsempfindlichkeit aufweisen, so dass auch dieser Parameter ohne fremde Hilfsmittel von der Frontseite aus durch eine Bedienperson eingestellt werden kann.

Die Steuerung kann mit insbesondere nur einer einzigen LED versehen sein, mit der mindestens drei und insbesondere vier verschiedene Betriebsarten anzeigbar sind. So können beispielsweise vier verschiedene Betriebsarten durch vier verschiedene Farben der LED oder der LEDs angezeigt werden, so dass eine Bedienperson eine Bestätigung darüber erhält, welche Betriebsart aktuell eingestellt ist. Eine solche LED kann entweder dauerhaft leuchten oder aber nach Ablauf einer vorbestimmten Zeitdauer erlöschen.

Auch kann die Steuerung ausgebildet und eingerichtet sein, mit Hilfe des Mikrotasters zwischen folgenden Betriebsarten umzuschalten: a) berührungsloser Schalter, b) Präsenzmelder oder c) Bewegungsmelder. Hierbei wird durch die Steuerung für jede dieser Betriebsarten eine geeignete Reichweite des Radarsensors bzw. eine unterschiedliche Empfindlichkeit oder eine unterschiedliche Größe des Strahlungskegels des Radarsensors eingestellt. Im Falle eines berührungslosen Schalters beträgt die Reichweite beispielsweise nur etwa 10 cm, während in der Betriebsart Präsenzmelder und in der Betriebsart Bewegungsmelder eine Reichweite von beispielsweise etwa 8 m einstellbar ist.

Auch kann die Steuerung ausgebildet und eingerichtet sein, mit Hilfe des Mikrotasters in eine Betriebsart "Schalter mit Timerfunktion" umzuschalten. Hierdurch kann die Steuerung - wiederum ausschließlich mit Hilfe des Mikrotasters - so eingestellt werden, dass eine elektrische Last für eine bestimmte Zeitdauer eingeschaltet wird. Das Schalten kann dabei in allen Betriebsarten durch aktives Betätigen des Mikrotasters oder aber berührungslos erfolgen, wie vorstehend beschrieben wurde. Durch wiederholtes Betätigen des Mikrotasters kann der Timer erneut gestartet werden.

Weiterhin kann die Steuerung ausgebildet und eingerichtet sein, durch kurzes Betätigen des Mikrotasters ein Schaltsignal zu erzeugen und durch längeres Betätigen des Mikrotasters in einen Betriebsartenwahlmodus umzuschalten. Hierdurch lässt sich mit Hilfe nur eines einzigen Mikrotasters sowohl eine elektrische Last schalten und es ist gleichzeitig mit Hilfe dieses Mikrotasters möglich, die Betriebsart der Steuerung zu wählen.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht eines elektrischen Installationsgeräts; und

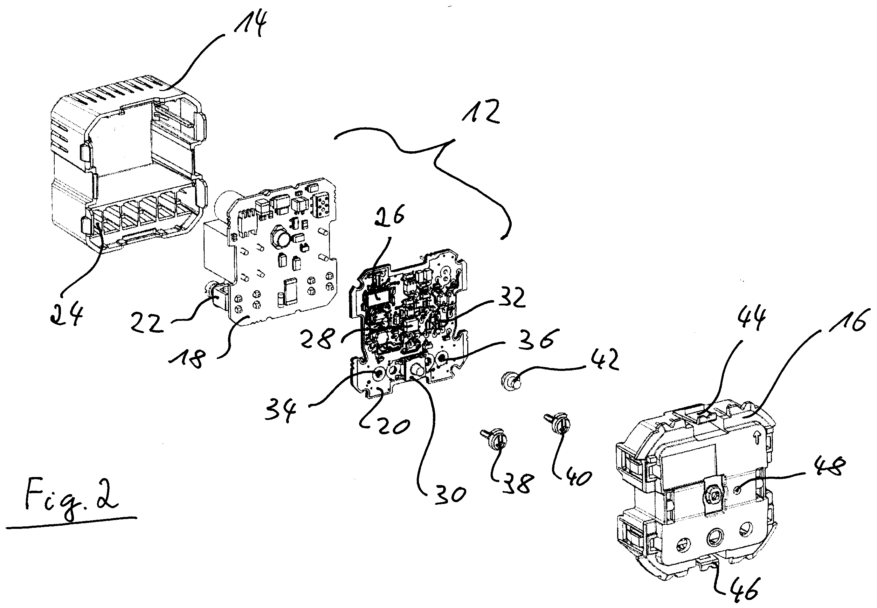

- Fig. 2: eine Explosionsdarstellung des Installationsgeräts von Fig. 1.

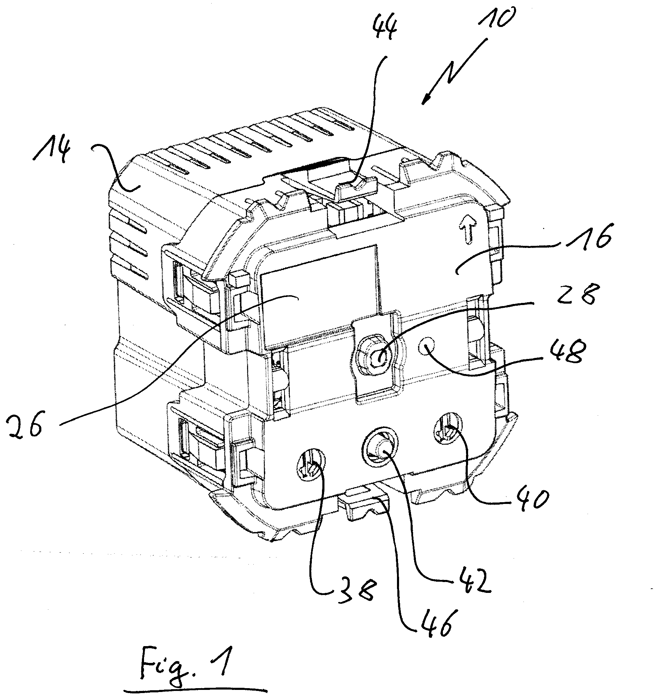

Fig. 1 zeigt eine perspektivische Ansicht einer vorteilhaften Ausführungsform eines elektrischen Installationsgeräts 10, das zum Schalten von elektrischen Lasten dient, beispielsweise von Leuchten oder anderen elektrischen Verbrauchern.

Selbstverständlich können jedoch auch lediglich Schaltsignale ausgegeben werden, die an ein Relais oder eine andere Steuerung weitergegeben werden. Das Installationsgerät 10 besitzt ein würfelartiges bzw. blockartiges Gehäuse, das bei dem dargestellten Ausführungsbeispiel aus zwei Gehäuseteilen 14 und 16 zusammengesetzt ist, die miteinander verclipst werden können.

Im Inneren des Gehäuses 14, 16 ist eine elektronische Steuerung 12 vorgesehen, die beispielsweise zwei parallel in dem Gehäuse angeordnete Platinen 18 und 20 aufweist, wobei auf der Rückseite der hinteren Platine 18 Anschlussklemmen 22 angeordnet sind, die in Kammern 24 des hinteren Gehäuseteils 14 eingeschoben werden können.

Auf der Vorderseite der frontseitig angeordneten Platine 20 ist zumindest ein, und insbesondere nur ein einziger Radarsensor 26 sowie optional ein Sensor 28 vorgesehen, der die Helligkeit des Umgebungslichts detektiert. Weiterhin befindet sich auf der Frontseite der Platine 20 und somit auch auf der Frontseite des Installationsgeräts ein Mikrotaster 30 und eine Zustands-LED 32. Schließlich sind auf der Vorderseite der Platine 20 und somit auch auf der Frontseite des Installationsgeräts 10 ein optionales manuell einstellbares Zeitglied 34 sowie ein optionales manuell von der Frontseite aus einstellbares Stellglied 36 für eine Änderung einer Helligkeitsempfindlichkeit angeordnet. Das Zeitglied 34 sowie das Stellglied 36 können mit Hilfe von Bedienelementen 38 und 40 durch eine Bedienperson verstellt werden. Für eine Betätigung des Mikrotasters 30 kann ein Verlängerungsstift 42 in das Gehäuseteil 16 eingesetzt werden. Auch ist es möglich, zwei oder mehr Radarsensoren 26 vorzusehen.

Für einen Zusammenbau des elektrischen Installationsgeräts 10 muss lediglich die Platine 18 in das hintere Gehäuseteil 14 eingesetzt werden und über elektrische Verbinder mit der vorderen Platine 20 verbunden werden, die in das vordere Gehäuseteil 16 eingesetzt und insbesondere eingeclipst werden kann. Hieraufhin können die beiden Gehäuseteile 14 und 16 miteinander verclipst werden, nachdem die Bauteile 38, 40 und 42 von hinten in das vordere Gehäuseteil 16 eingesetzt worden sind. Hierdurch ergibt sich der in Fig. 1 dargestellte äußerst kompakte Aufbau des Installationsgeräts. Dieses kann mit Hilfe von zwei Rastlaschen 44 und 46 auf einfachste Weise in einem Tragrahmen oder einem umgebenden Gehäuse verrastet werden. Beispielsweise kann das Installationsgerät 10 mit Hilfe eines bekannten Tragrahmens in eine Hohlwanddose eingesetzt werden, wobei vor auf die Frontseite des Installationsgeräts beispielsweise mit Hilfe eines Blendrahmens eine Schaltwippe eingesetzt werden kann, mit deren Hilfe der Mikrotaster 30 betätigbar ist. Bei abgenommener Schaltwippe kann der Mikrotaster 30 ebenfalls betätigt werden, um verschiedene Betriebsarten der Steuerung 12 einzustellen, die dann mit Hilfe der LED 32 angezeigt werden können. Ein Sichtfenster 48 für eine bessere Erkennbarkeit der LED 32 kann in dem vorderen Gehäuseteil 16 vorgesehen sein.

Die Steuerung des vorstehend beschriebenen Installationsgeräts 10 ist so ausgebildet und eingerichtet, dass durch kurzes Betätigen des Mikrotasters 30 zu jedem Zeitpunkt ein Schalten einer elektrischen Last möglich ist und dies unabhängig davon, welche Betriebsart eingestellt und welche Umgebungshelligkeit vorhanden ist.

Zum Einstellen der gewünschten Betriebsart kann durch längeres Betätigen des Mikrotasters 30 in einen Betriebsartenwahlmodus umgeschaltet werden. In diesem Modus können - wiederum durch Betätigen des Mikrotasters 30 - verschiedene Betriebsarten ausgewählt werden, beispielsweise berührungsloser Schalter, Schalter mit Timerfunktion, Präsenzmelder oder auch Bewegungsmelder. Die jeweils ausgewählte Betriebsart kann dann durch die LED 32 in einer unterschiedlichen Farbe angezeigt werden.

Für die Einstellung der Verzögerungszeit bei Timerfunktion kann von der Frontseite des Installationsgeräts aus das Stellglied 34 betätigt werden. Für eine Änderung der Helligkeitsempfindlichkeit der Steuerung 12 kann dies in gleicher Weise durch manuelle Einstellung des Stellglieds 36 von der Frontseite aus erfolgen.

In der Steuerung 12 ist ferner eine Kalibrierroutine hinterlegt, mit der Signale des Radarsensors 26 über einen ersten vorbestimmten Zeitraum detektiert werden, wobei ein während dieses Zeitraums ermittelter Maximalwert als Auslöseschwellwert durch die Steuerung 12 in dieser abgespeichert wird. Nach Auslösen der Kalibrierroutine kann beispielsweise während eines Zeitraums von beispielsweise 5 bis 10 Minuten eine Detektion und Speicherung der von dem Radarsensor empfangenen Radarsignale erfolgen, wobei anschließend der Maximalwert dieser abgespeicherten Werte als Auslöseschwellwert festgelegt und in der Steuerung abgespeichert wird. Um eine Fehlauslösung auszuschließen, kann der abgespeicherte Auslöseschwellwert von der Steuerung zuvor um einen vorbestimmten Wert, beispielsweise 10 %, erhöht und als neuer Auslöseschwellwert in der Steuerung abgespeichert werden.

Nach Ablauf des ersten vorbestimmten Zeitraums kann die Steuerung die Kalibrierroutine beenden und in einen Normalbetrieb umschalten.

Um eine automatisierte Selbstkalibrierung zu ermöglichen, kann die Steuerung mit Hilfe des Helligkeitssensors 28 die Helligkeit des Umgebungslichts detektieren und über einen zweiten vorbestimmten Zeitraum Helligkeitswerte abspeichern. Hierbei kann die Kalibrierroutine von der Steuerung ausgelöst werden, wenn die abgespeicherten Helligkeitswerte von einem Maximalwert auf einen Minimalwert abgesunken sind. Für eine erhöhte Genauigkeit kann die Steuerung über mehrere Tage Helligkeitswerte über den zweiten vorbestimmten Zeitraum abspeichern und hieraus einen Mittelwert oder einen insbesondere gemittelten Maximalwert bilden, wodurch eine verbesserte Erkennung von Tag und Nacht erreicht wird.

Es versteht sich, dass die vorliegende Erfindung auch ein Verfahren umfasst, bei dem die vorstehend beschriebene Kalibrierroutine durchgeführt wird. Das Verfahren kann in der Steuerung 12 implementiert sein und die vorstehend beschriebenen Schritte bzw. Routinen umfassen.

## Patentansprüche

1. Elektrisches Installationsgerät (10) zum Schalten von elektrischen Lasten, umfassend eine elektronische Steuerung (12) mit
- einem insbesondere einzigen Radarsensor (26), und mit
- einem an einer Fronseite des Installationsgerätes (10) angeordneten Mikrotaster (30),
- wobei die Steuerung (12) ausgebildet und eingerichtet ist, ein durch den Radarsensor (26) oder den Mikrotaster (30) ausgelöstes Schaltsignal zu erzeugen, und wobei
in der Steuerung (12) eine Kalibrierroutine hinterlegt ist, mit der Signale des Radarsensors (26) über einen ersten vorbestimmten Zeitraum detektiert werden, wobei ein während dieses Zeitraums ermittelter Maximalwert als Auslöseschwellwert in der Steuerung (12) abgespeichert wird.

2. Elektrisches Installationsgerät nach Anspruch 1,
**dadurch gekennzeichnet,**
**dass** die Kalibrieroutine von der Steuerung (12) abgebrochen wird, wenn Signale des Radarsensors (26) detektiert werden, die einen vorbestimmten Schwellwert überschreiten.

3. Elektrisches Installationsgerät nach Anspruch 1 oder 2,
**dadurch gekennzeichnet,**
**dass** die Steuerung (12) die Kalibrieroutine nach Ablauf des ersten vorbestimmten Zeitraums beendet und in einen Normalbetrieb umschaltet.

4. Elektrisches Installationsgerät nach einem der vorstehenden Ansprüche, **dadurch gekennzeichnet,**
**dass** der abgespeicherte Auslöseschwellwert in der Steuerung (12) um einen vorbestimmten Wert erhöht und als neuer Auslöseschwellwert abgespeichert wird.

5. Elektrisches Installationsgerät nach einem der vorstehenden Ansprüche, **dadurch gekennzeichnet,**
**dass** die Steuerung (12) mit einem Sensor (28) versehen ist, der die Helligkeit des Umgebungslichts detektiert, und dass die Steuerung (12) Helligkeitswerte über einen zweiten vorbestimmten Zeitraum abspeichert.

6. Elektrisches Installationsgerät nach Anspruch 5,
**dadurch gekennzeichnet,**
**dass** die Kalibrierroutine von der Steuerung (12) ausgelöst wird, wenn die abgespeicherten Helligkeitswerte von einem Maximalwert auf einen Minimalwert abgesunken sind.

7. Elektrisches Installationsgerät nach einem der vorstehenden Ansprüche 5 oder 6,
**dadurch gekennzeichnet,**
**dass** die Steuerung (12) über mehrere Tage Helligkeitswerte über den zweiten vorbestimmten Zeitraum abspeichert und hieraus einen Mittelwert bildet.

8. Elektrisches Installationsgerät nach einem der vorstehenden Ansprüche, **dadurch gekennzeichnet,**
**dass** die Steuerung (12) ausgebildet und eingerichtet ist, zwischen mindestens zwei durch den Mikrotaster (30) einstellbaren Betriebsarten umzuschalten, wobei insbesondere in jeder Betriebsart eine andere Reichweite des Radarsensors (26) eingestellt ist.

9. Elektrisches Installationsgerät nach einem der vorstehenden Ansprüche, **dadurch gekennzeichnet,**
**dass** die Steuerung (12) ausgebildet und eingerichtet ist, mit Hilfe des Mikrotasters (30) zwischen folgenden Betriebsarten umzuschalten: berührungsloser Schalter, Präsenzmelder und Bewegungsmelder.

10. Elektrisches Installationsgerät nach einem der vorstehenden Ansprüche, **dadurch gekennzeichnet,**
**dass** die Steuerung (12) ausgebildet und eingerichtet ist, durch kurzes Betätigen des Mikrotasters (30) ein Schaltsignal für eine elektrische Last zu erzeugen und durch längeres Betätigen des Mikrotasters (30) in einen Betriebsartenwahlmodus umzuschalten.

11. Elektrisches Installationsgerät nach einem der vorstehenden Ansprüche, **dadurch gekennzeichnet,**
**dass** die Steuerung (12) ausgebildet und eingerichtet ist, die Kalibrierroutine in vorbestimmten Zeitabständen zu wiederholen.

12. Elektrisches Installationsgerät nach einem der vorstehenden Ansprüche, **dadurch gekennzeichnet,**
**dass** die Steuerung (12) ausgebildet und eingerichtet ist, ein durch den Mikrotaster ausgelöstes Schaltsignal in jeder Betriebsart und bei jeder Umgebungshelligkeit auszulösen.
